# EUROPÄISCHE PATENTSCHRIFT

(11) **EP 2 673 867 B1**
(45) Veröffentlichungstag und Bekanntmachung des Hinweises auf die Patenterteilung: **10.03.2021**
(21) Anmeldenummer: 12702410.7
(22) Anmeldetag: 17.01.2012
(51) Int. Cl.: H02K 41/03, B65G 23/23, B65G 47/96, H02K 1/27, H02K 16/00

(54) **SORTER**
SORTIERER
DISPOSITIF DE TRIAGE

(30) Priorität: 07.02.2011 DE 102011010549
(43) Veröffentlichungstag der Anmeldung: 18.12.2013
(73) Patentinhaber: SEW-EURODRIVE GmbH & Co. KG, 76646 Bruchsal (DE)
(72) Erfinder: BERGER, Lothar, 76646 Bruchsal (DE)
(86) Internationale Anmeldenummer: PCT/EP2012/000174
(87) Internationale Veröffentlichungsnummer: WO 2012/107160

(56) Entgegenhaltungen:
- EP-A2- 1 747 844
- WO-A1-2008/125122
- US-A1- 2006 011 093
- US-B1- 6 528 908

## Beschreibung

Die Erfindung betrifft einen Sorter.

Aus der WO 2008/125122 A1 ist ein Sorter (sorting system) bekannt, das aneinandergekoppelte Wagen (carts) aufweist, die jeweils eine Reihe von Dauermagneten aufweisen, wobei der letzte und erste Dauermagnet in Bewegungsrichtung kürzer ausgeführt sind als die anderen Dauermagnete der Reihe, um einen Kupplungsbereich frei zu halten. Dabei wird der Kupplungsbereich durch die Verkürzte Ausführung der beiden Dauermagnete geschaffen, die sich am jeweiligen Endbereich eines jeden Wagens befinden. Ein aus Hallsensoren bestehendes Positionssensorsystem erhält beim Vorbeibewegen der Wagen zwar ein zeitlich verkürztes Signal, aber kein lückendes Signal. Es genügt also sogar ein einziges Hallsensorsystem, das die vorbeibewegenden Dauermagnete zählt, um die Position des Sorters zu erfassen.

Aus der WO 2008/125121 A1 ist ein Sorter (sorting system) bekannt, das aneinandergekoppelte Wagen (carts) aufweist, die jeweils eine Reihe von Dauermagneten aufweisen, wobei im Kopplungsbereich eine Magnettücke, also ein einziger lückender Dauermagnet angeordnet ist. Somit stehen sich an den jeweiligen sich gegenüber stehenden Wagen jeweils gleichartig magnetisierte Dauermagnete gegenüber, wie beispielswiese Nordpol und Nordpol. Auch auf diese Weise ist ein Kupplungsbereich freigehalten. Ein aus Hallsensoren bestehendes Positionssensorsystem erhält beim Vorbeibewegen der Wagen zwar ein zeitlich verkürztes Signal, aber kein lückendes Signal. Mit einem einzigen Hallsensorsystem, das die vorbeibewegenden Dauermagnete zählt, ist die Erfassung der Position des Sorters nicht in einfacher Weise möglich.

Aus der DE 102008 006 305 A1 ist ein Positionserfassungssystem bekannt, das bei einer lückenden Dauermagnetanordnung die Position in einfacher Weise fehlerfrei erfassen kann.

Aus der EP 1 747 844 A2 ist eine endlose Kette von Fördereinheiten bekannt, die von einem Linearmotor angetrieben werden.

Aus der US 2006/0011093 A1 ist ein Förderer bekannt und ein Verfahren zur Kraftübertragung bei dem Förderer.

Aus der US 6,528,908 B1 ist ein induktionsantrieb für Förderer bekannt.

Der Erfindung liegt daher die Aufgabe zugrunde, einen Sorter kostengünstig herstellbar zu machen,

Erfindungsgemäß wird die Aufgabe bei dem Sorter nach den in Anspruch 1 angegebenen Merkmalen gelöst.

Wichtige Merkmale des erfindungsgemäßen Sorters sind, dass der Sorter in Reihe angeordnete, jeweils aneinander gekoppelte Wagen aufweist, die entlang einer Fahrbahn bewegbar angeordnet sind,
wobei jeder Wagen eine Dauermagnetanordnung aufweist, die aus in Bewegungsrichtung in Reihe angeordneten, regelmäßig voneinander beabstandeten Dauermagneten besteht, wobei der jeweils nächstbenachbarte Dauermagnet eine entgegengesetzte Magnetisierungsrichtung aufweist,
wobei ein Abstand zwischen der in Bewegungsrichtung vorderen Kante zweier benachbarten Dauermagnete ein Abstand ist, und wobei eine jeweilige Länge in Bewegungsrichtung eines Dauermagneten eine Länge ist, wobei die Länge kleiner ist als der Abstand, wobei zwischen den Wagen ein Kopplungsbereich vorgesehen ist,
wobei bei gerader Ausrichtung zweier nächstbenachbarter Wagen der letzte Dauermagnet eines der beiden Wagen ebenso regelmäßig beabstandet ist vom ersten Dauermagnet des anderen der beiden Wagen wie die sonstigen Dauermagnete zueinander, wobei Kanten des ersten und letzten Dauermagnets gerundet ausgeführt sind zur Ermöglichung des Durchfahrens von engen Kurven, wobei der letzte Dauermagnet des einen der beiden Wagen eine entgegengesetzte Magnetisierungsrichtung aufweist wie der erste Dauermagnet des anderen der beiden Wagen,
wobei die gesamte Dauermagnetanordnung aller Dauermagnete des Sorters jeweils im Kopplungsbereich der Wagen keine Lücke aufweist,
so dass der letzte Dauermagnet des ersten Wagens und der erste Dauermagnet eines hierzu nächstbenachbarten Wagens denselben Abstand zueinander aufweisen wie die sonstigen Dauermagnete zu ihren nächstbenachbarten Dauermagneten,
und wobei alle Dauermagnete dieselbe Länge aufweisen.

Von Vorteil ist dabei, dass keine Lücken vorhanden sind und somit ein ruckfreier Antrieb als Synchronlinearmotor ausführbar ist Außerdem ist ein Bestimmen der Position des der Wagenkette des Sorters einfach durch Abzählen der Dauermagnete ausführbar. Da jedem Wagen eine bekannte Anzahl von Dauermagnete in regelmäßiger Beabstandung zugeordnet ist, ist ein bloßes Abzählen ausführbar und daraus in einfacher Weise die Position bestimmbar.

Um kleine Kurvenradien durchfahrbar zu machen weist vorzugsweise jeder Wagen an der Kante eines Dauermagneten seinen Endbereich in Bewegungsrichtung auf. Nur die Kopplungsvorrichtung der Wagen ragt über diesen Bereich hinaus.

Bei dem Sorter stehen sich vorteiligerweise entgegengesetzt magnetisierte Dauermagnete an den sich gegenüber stehenden Endbereichen der nächstbenachbarten Wagen gegenüber. Dabei wird also der letzte Dauermagnet eines ersten Wagens, beispielsweise ein zur Statorwicklung gerichteter Nordpol, gefolgt von einem ersten Dauermagnet des nächsten Wagens, beispielsweise ein zur Statorwicklung gerichteter Südpol. Ein an der Fahrbahn angeordneter Hallsensor oder Wiegandsensor ist somit beispielsweise in der Lage, in einfacher Weise, nämlich durch Erkennen der Magnetisierungsrichtung, die Anzahl der aufeinander folgenden Dauermagnete zu bestimmen. Daraus lässt sich bei bekannter Anzahl von Dauermagneten des jeweiligen Wagens die Position des Sorters bestimmen. Wenn sich hingegen am Kopplungsbereich gleichgerichtet magnetisierte Dauermagnete gegenüberstehen, beispielsweise zwei Nordpole, würden, ist ein einfaches Abzählen der Dauermagnete mittels Erkennen der Magnetisierungsrichtungsänderung nicht ausführbar.

Dabei sind Kanten und/oder Ecken des ersten und letzten Dauermagnets gerundet ausgeführt. Vorteiligerweise wird somit das Durchfahren enger Kurven ermöglicht. Das Abrunden der quer zur Schienenrichtung und quer zur Schwenkrichtung ausgerichteten Kanten der jeweils ersten und letzten Dauermagnete eines jeweiligen Wagens ermöglicht das Durchfahren noch engerer Kurven. Dabei ist jeder Kurve der Fahrbahn ein maximaler Schwenkwinkel zugeordnet. Wenn alle, dem jeweils nächsten Wagen zugewandten Kanten des ersten und letzten Dauermagnetes jedes Wagens abgerundet werden, ist sogar eine Fahrbahn durchfahrbar, die entsprechend enge Kurven aufweist, wobei die zu den jeweiligen Kurven zugehörigen Schwenkebenen auch senkrecht aufeinander stehen dürfen.

Bei einer vorteilhaften Ausgestaltung sind die Dauermagnete quaderförmig ausgeführt. Von Vorteil ist dabei, dass die Dauermagnete kostengünstig herstellbar sind.

Bei einer vorteilhaften Ausgestaltung unterscheiden sich alle Dauermagnete nur in der Magnetisierungsrichtung, insbesondere weisen also dieselben geometrischen Abmessungen auf. Von Vorteil ist dabei, dass wiederum eine kostengünstige Herstellung wegen der höheren Stückzahl gleicher Teile erreichbar ist.

Bei einer vorteilhaften Ausgestaltung weisen die Dauermagnete in Bewegungsrichtung die Länge b auf und den Abstand a' zu ihrem jeweils nächstbenachbarten Dauermagnet,
wobei der Kopplungsbereich weniger als den Abstand (b-a') beansprucht, insbesondere also der Sorter, insbesondere die Fahrbahn des Sorters, derart gestaltet ist, dass beim Durchfahren von Kurven des Sorters keine Berührung der im Kopplungsbereich nächstbenachbarten, in Reihe koaxial ausgerichteten Dauermagnete auftritt,
wobei der Abstand zwischen den in Bewegungsrichtung vorderen Kanten, Ecken oder zwischen den Schwerpunkten oder Mittelpunkten der Dauermagnete gemessen ist, wird und/oder besteht. Von Vorteil ist dabei, dass die Dauermagnete sich nicht berühren, sondern einen Abstand zueinander aufweisen, soweit die Wagen kollinear, also in gerader Linie, angeordnet sind. Bei Kurvenfahrten verringert sich der Abstand. Dabei sind aber im Sorter nur solche Kurvenradien realisiert, dass keine Berührung der Dauermagnete auftritt.

Bei einer vorteilhaften Ausgestaltung ist der kleinste Kurvenradius des Sorters, insbesondere der Fahrbahn, größer als 2/a *sin(β), wobei tan(ß) = c/(b-a) ist, a der Abstand der Mittelpunkte oder Kanten zweier nächstbenachbarter Dauermagnete ist, b die Ausdehnung der jeweiligen Dauermagnete in Bewegungsrichtung und c die Ausdehnung der jeweiligen Dauermagnete quer zur Bewegungsrichtung. Von Vorteil ist dabei, dass nur derartige Kurvenradien im Sorter realisiert sind, dass die Dauermagnete sich nicht berühren. Wichtig ist dabei, dass die Dauermagnete überhaupt einen Abstand aufweisen und somit ohne lückende Dauermagnete trotzdem Kurvenfahrten realisierbar sind.

Bei einer vorteilhaften Ausgestaltung ist eine Magnetisierungsrichtung senkrecht zur Bewegungsrichtung ausgerichtet. Von Vorteil ist dabei, dass die Magnetisierungsrichtung in Richtung oder entgegengesetzt zur Fahrbahn beziehungsweise zum Stator ausrichtbar ist.

Bei einer vorteilhaften Ausgestaltung sind die Wagen entlang der Fahrbahn schienengeführt, Von Vorteil ist dabei, dass eine einfache Bestimmung der Position ausführbar ist.

Bei einer vorteilhaften Ausgestaltung ist die Dauermagnetanordnung modular aufgebaut, also aus Modulen zusammengesetzt, wobei ein jeweiliges Modul eine jeweilige Grundplatte aufweist, auf der eine dem Modul zugeordnete Anzahl von Dauermagneten befestigt ist,
insbesondere wobei unterschiedliche Module sich in der Anzahl unterscheiden,
insbesondere wobei die Grundplatte an der der Fahrbahn zugeordneten Seite des jeweiligen Wagens angeordnet ist. Von Vorteil ist dabei, dass eine einfache Herstellung von Wagen unterschiedlicher Länge aus einem Baukasten von Modulen ausführbar ist. Dabei ist aus die jeweilige Dauermagnetanordnung eines jeden Wagens durch in Bewegungsrichtung aneinander gesetzte Module herstellbar. Somit sind auch aus den in einem Lager bevorrateten Modulen verschiedene Wagen und/oder Sortersysteme herstellbar. Je nach Bedarf ist also aus einem Baukasten von Modulen ein Wagen und/oder Sorter gewünschter Länge zusammensetzbar.

Bei einer vorteilhaften Ausgestaltung stehen sich als nächstbenachbarte Dauermagnete Dauermagnete entgegengesetzter Magnetisierungsrichtung gegenüber. Von Vorteil ist dabei, dass wiederum die Bestimmung der Position in einfacher Weise ausführbar ist, also durch Bestimmen der Magnetisierungsrichtungsänderung und entsprechendes Abzählen der Magnetisierungsrichtungsänderungswechsel.

Bei einer vorteilhaften Ausgestaltung ist die Dauermagnetanordnung als Reaktivteil eines Linearsynchronmotors wirksam, insbesondere also entlang der Fahrbahn Statorwicklungen des Linearsynchronmotors angeordnet sind, von deren Magnetfeldern in Wechselwirkung mit den Dauermagneten die Traktionskraft für die Wagen und/oder des Sorters erzeugbar ist. Von Vorteil ist dabei, dass ein dynamisches Antriebsprinzip für den Sorter wählbar ist. Somit ist ein schnelles Positionieren, also Anfahren einer gewünschten Position des Sorters, ausführbar. Unter Position ist dabei auch die zurückgelegte Fahrstrecke der Wagen seit Inbetriebnahme zu verstehen.

Bei einer vorteilhaften Ausgestaltung sind die Module jedes Wagens in Bewegungsrichtung hintereinander angeordnet und an einem Befestigungsmittel des jeweiligen Wagens verbunden. Von Vorteil ist dabei, dass der Wagen ein Befestigungsmittel zur Aufnahme der Module aufweist, so dass die Module in einfacher Weise aneinander reihbar und mit dem Wagen verbindbar sind. Als Befestigungsmittel ist beispielsweise auch das Gestänge des jeweiligen Wagens verwendbar.

Weitere Vorteile ergeben sich aus den Unteransprüchen.

Die Erfindung wird nun anhand von schematischen Abbildungen näher erläutert:

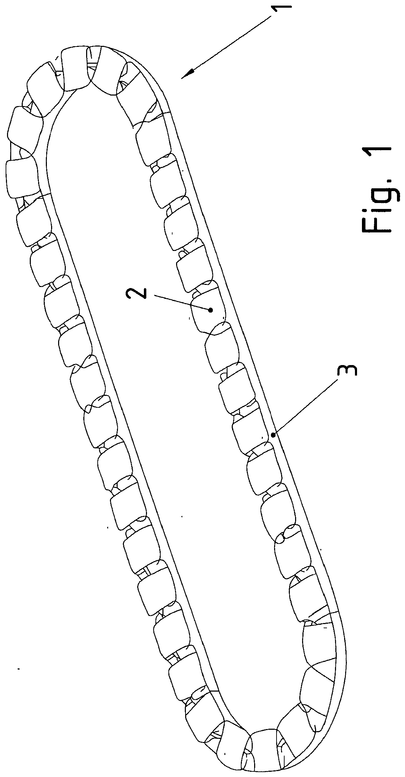

In der Figur 1 ist ein Sorter 1 mit hintereinander angeordneten, jeweils aneinander gekoppelten Wagen 2 gezeigt.

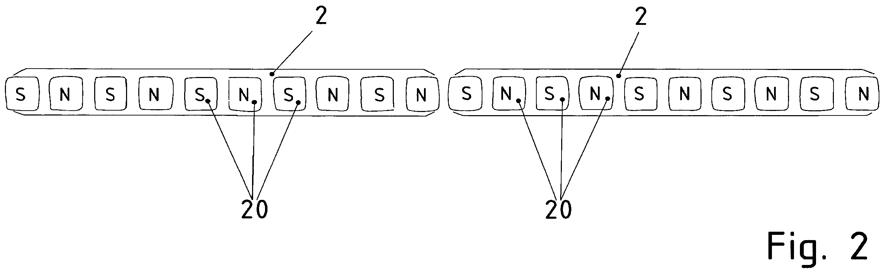

In Figur 2 ist ein Ausschnitt dieser Wagenkette in Seitenansicht gezeigt.
In Figur 3 ist ein Ausschnitt dieser Wagenkette in Seitenansicht gezeigt, wobei die jeweils zueinander nächstbenachbarten Dauermagnete 20 abwechselnd magnetisiert sind.

Die Wagen 2 des Sorters 1 bilden eine geschlossene Kette von Wagen 2. welche auf einer Fahrbahn bewegbar angeordnet sind. Hierzu ist beispielsweise jeder Wagen 2 mit Rädern ausgestattet, die auf Schienen der Fahrbahn bewegbar sind. Statt der schienengeführten Ausführung sind aber auch nicht-schienengeführte Anwendungen ausführbar.

Die Fahrbahn weist Statorwicklungen zur Erzeugung eines Magnetfeldes auf, welches wechselwirkt mit Dauermagneten, welche vorzugsweise an der Unterseite der Wagen 2 angeordnet sind. Somit ist ein Antreiben der Wagen nach Art eines Synchronlinearmotors ermöglicht.

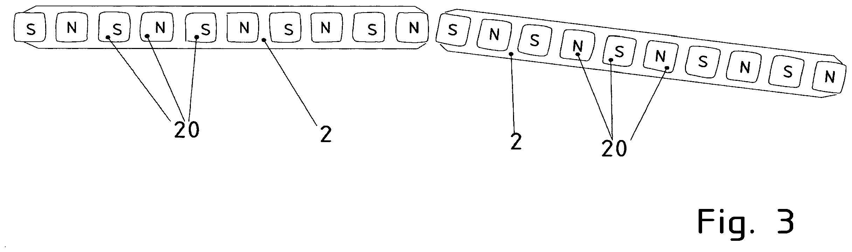

Die Dauermagnete 20 an der Unterseite jedes Wagens 2 sind in Bewegungsrichtung hintereinander und jeweils regelmäßig voneinander beabstandet angeordnet. Die Magnetisierungsrichtung von jeweils direkt benachbarten Dauermagneten ist entgegengesetzt, so dass zur Fahrbahn hin abwechselnd Nordpole und Südpole angeordnet sind, wie in Figur 3 deutlich gemacht. Der Abstand zwischen der in Bewegungsrichtung vorderen Kante zweier benachbarten Dauermagnete ist also ein Abstand a. Die jeweilige Länge in Bewegungsrichtung eines Dauermagneten ist b, wobei b vorzugsweise kleiner ist als a, so dass die Dauermagnete 20 sich nicht direkt berühren.

Zwischen den Wagen ist ein Kopplungsbereich vorgesehen, so dass die regelmäßig beabstandete Dauermagnetanordnung eines Wagens 2 und die die regelmäßig beabstandete Dauermagnetanordnung eines hierzu nächstbenachbarten Wagens 2 nur dann den gleichen regelmäßigen Abstand aufweist, wenn die beiden Wagen jeweils in Linie zueinander ausgerichtet sind. Der Abstand der in Bewegungsrichtung vorderen Kante des letzten Dauermagneten 20 eines Wagens 2 zur in Bewegungsrichtung vorderen Kante des ersten Dauermagneten 20 des hierzu nächstbenachbarten Wagens 2 beträgt dann also a.

Die gesamte Dauermagnetanordnung aller Dauermagnete des Sorters weist also jeweils im Kopplungsbereich der Wagen keine Lücke auf.

Der für den Kopplungsbereich bei Durchfahren von Radien maximal ausnutzbare Bereich ist als durch die Differenz b-a vorgegeben, da die Dauermagnete auch im an den Kopplungsbereich angrenzenden Bereich nicht kürzer ausgeführt werden sondern alle Dauermagnete dieselbe Länge aufweisen.

Vorteiligerweise ist somit ein nichtlückender Synchronlinearmotorantrieb realisierbar. Denn zum Stator hin ist kein Unterschied zwischen Kopplungsbereich und bloßer Beabstandung innerhalb des jeweiligen Wagens 2 zwischen den Dauermagneten 20 vorhanden.

In Kurven ist ein relatives Schwenken der beiden benachbarten Wagen ermöglicht, bis die Ecken der benachbarten Dauermagnete im Kopplungsbereich der Wagen 2 sich berühren. Wenn die Breite der Dauermagnete quer zur Bewegungsrichtung c beträgt, ist also der Schwenkwinkel β durch tan(β) = c/(b-a) begrenzbar.

Durch Abrunden der Kanten der beiden sich am Kopplungsbereich der beiden benachbarten Wagen gegenüberstehenden Dauermagnete 20 ist ein Durchfahren von sehr engen Kurven ausführbar. Dabei werden diejenigen Kanten der quaderförmigen Dauermagnete abgerundet, welche quer zur Schienenrichtung verlaufen und senkrecht zur Kurvenebene verlaufen. Die Kurvenebene ist dabei diejenige Ebene, welche den Schwenkwinkel enthält. Dabei müssen nur die Kanten abgerundet werden, welche dem benachbarten Wagen zugewandt sind.

Vorzugsweise sind also alle verwendeten Dauermagnete geometrisch gleich, wobei der erste und letzte Dauermagnet eines jeden Wagens an seinem dem jeweils benachbarten Wagen zugewandten Ende abgerundete Kanten aufweist. Die entsprechenden Ecken werden ebenfalls abgerundet.

Das Abrunden ist als der Magnetisierung des Magnetmaterials vorausgehender oder nachfolgender Bearbeitungsschritt ausführbar. Im Lager sind also die geometrisch gleichartigen Dauermagnete bevorratbar, wobei nur für die vorderen und hinteren Dauermagnete eines jeweiligen Wagens die quer zur Schwenkebene und quer zur Schienenrichtung ausgerichteten Außenkanten abgerundet werden müssen.

### Bezugszeichenliste

1 Sorter
2 Wagen
3 Fahrbahn
20 Dauermagnete

## Patentansprüche

1. Sorter (1),
wobei der Sorter (1) in Reihe angeordnete, jeweils aneinander gekoppelte Wagen (2) aufweist, die entlang einer Fahrbahn (3) bewegbar angeordnet sind,
wobei jeder Wagen (2) eine Dauermagnetanordnung aufweist, die aus in Bewegungsrichtung in Reihe angeordneten, regelmäßig voneinander beabstandeten Dauermagneten (20) besteht, wobei der jeweils nächstbenachbarte Dauermagnet (20) eine entgegengesetzte Magnetisierungsrichtung aufweist,
wobei ein Abstand zwischen der in Bewegungsrichtung vorderen Kante zweier benachbarten Dauermagnete (20) ein Abstand (a) ist, und
wobei eine jeweilige Länge in Bewegungsrichtung eines Dauermagneten (20) eine Länge (b) ist,
wobei die Länge (b) kleiner ist als der Abstand (a),
wobei zwischen den Wagen (2) ein Kopplungsbereich vorgesehen ist,
**dadurch gekennzeichnet, dass**
bei gerader Ausrichtung zweier nächstbenachbarter Wagen (2) der letzte Dauermagnet (20) eines der beiden Wagen (2) ebenso regelmäßig beabstandet ist vom ersten Dauermagnet (20) des anderen der beiden Wagen (2) wie die sonstigen Dauermagnete (20) zueinander, wobei Kanten des ersten und letzten Dauermagnets gerundet ausgeführt sind zur Ermöglichung des Durchfahrens von engen Kurven,
wobei der letzte Dauermagnet (20) des einen der beiden Wagen (2) eine entgegengesetzte Magnetisierungsrichtung aufweist wie der erste Dauermagnet (20) des anderen der beiden Wagen (2),
wobei die gesamte Dauermagnetanordnung aller Dauermagnete (20) des Sorters (1) jeweils im Kopplungsbereich der Wagen (2) keine Lücke aufweist,
so dass der letzte Dauermagnet (20) des ersten Wagens (2) und der erste Dauermagnet (20) eines hierzu nächstbenachbarten Wagens (2) denselben Abstand zueinander aufweisen wie die sonstigen Dauermagnete (20) zu ihren nächstbenachbarten Dauermagneten (20),
und wobei alle Dauermagnete (20) dieselbe Länge (b) aufweisen.

2. Sorter (1) nach Anspruch 1,
**dadurch gekennzeichnet, dass**
die Dauermagnete quaderförmig ausgeführt sind.

3. Sorter (1) nach mindestens einem der vorangegangenen Ansprüche,
**dadurch gekennzeichnet, dass**
alle Dauermagnete (20) sich nur In der Magnetisierungsrichtung unterscheiden, also dieselben geometrischen Abmessungen aufweisen.

4. Sorter (1) nach mindestens einem der vorangegangenen Ansprüche,
**dadurch gekennzeichnet, dass**
die Fahrbahn (3) des Sorters (1) derart gestaltet ist, dass beim Durchfahren von Kurven des Sorters (1) keine Berührung der im Kopplungsbereich nächstbenachbarten, in Reihe koaxial ausgerichteten Dauermagnete (20) auftritt.

5. Sorter (1) nach mindestens einem der vorangegangenen Ansprüche,
**dadurch gekennzeichnet, dass**
eine Magnetisierungsrichtung senkrecht zur Bewegungsrichtung oder entgegengesetzt zu dieser Richtung ausgerichtet ist.

6. Sorter (1) nach mindestens einem der vorangegangenen Ansprüche,
**dadurch gekennzeichnet, dass**
die Wagen (2) entlang der Fahrbahn (3) schienengeführt sind.

7. Sorter (1) nach mindestens einem der vorangegangenen Ansprüche,
**dadurch gekennzeichnet, dass**
die Dauermagnetanordnung modular aufgebaut ist, also aus Modulen zusammengesetzt ist, wobei ein jeweiliges Modul eine jeweilige Grundplatte aufweist, auf der eine dem Modul zugeordnete Anzahl von Dauermagneten (20) befestigt ist.

8. Sorter (1) nach Anspruch 7,
**dadurch gekennzeichnet, dass**
unterschiedliche Module sich in der Anzahl von Dauermagneten (20 unterscheiden.

9. Sorter (1) nach einem der Ansprüche 7 bis 8,
**dadurch gekennzeichnet, dass**
die Grundplatte an der der Fahrbahn (3) zugeordneten Seite des jeweiligen Wagens (2) angeordnet ist.

10. Sorter (1) nach mindestens einem der vorangegangenen Ansprüche,
**dadurch gekennzeichnet, dass**
die Dauermagnetanordnung als Reaktivteil eines Linearsynchronmotors wirksam ist, also entlang der Fahrbahn (3) Statorwicklungen des Linearsynchronmotors angeordnet sind, von deren Magnetfeldern in Wechselwirkung mit den Dauermagneten (20) die Traktionskraft für die Wagen (2) des Sorters (1) erzeugbar ist.

11. Sorter (1) nach mindestens einem der vorangegangenen Ansprüche,
**dadurch gekennzeichnet, dass**
die Module jedes Wagens (2) in Bewegungsrichtung hintereinander angeordnet und an einem Befestigungsmittel des jeweiligen Wagens (2) verbunden sind.

## Claims

1. A sorter (1),
wherein the sorter (1) has carts (2), arranged in a row and in each case coupled to one another, which are movably arranged along a track (3),
wherein each cart (2) has a permanent magnet arrangement consisting of permanent magnets (20) arranged in a row in the direction of motion and regularly spaced apart from one another, wherein the permanent magnet (20) next-adjacent in each case has an opposite magnetisation direction,
wherein a spacing, between the edge, at the front in the direction of motion, of two adjacent permanent magnets (20) is a spacing (a), and
wherein a respective length in the direction of motion of a permanent magnet (20) is a length (b),
wherein the length (b) is shorter than the spacing (a),
wherein a coupling region is provided between the carts (2),
**characterised in that**
in the case of a straight orientation of two next-adjacent carts (20), the last permanent magnet (20) of one of the two carts (2) is just as regularly spaced apart from the first permanent magnet (20) of the other of the two carts (2) as the other permanent magnets (20) are from one another,
wherein edges of the first and last permanent magnet are rounded to enable travel through tight curves,
wherein the last permanent magnet (20) of one of the two carts (2) has an opposite magnetisation direction from the first permanent magnet (20) of the other of the two carts (2), wherein the entire permanent magnet arrangement of all permanent magnets (20) of the sorter (1) does not have a gap in the coupling region of the carts (2) in each case,
so that the last permanent magnet (20) of the first cart (2) and the first permanent magnet (20) of a cart (2) next adjacent thereto have the same spacing from one another as the other permanent magnets (20) from their next-adjacent permanent magnets (20),
and wherein all permanent magnets (20) have the same length (b).

2. A sorter (1) according to claim 1,
**characterised in that**,
the permanent magnets are cuboid.

3. A sorter (1) according to at least one of the preceding claims,
**characterised in that**
all permanent magnets (20) differ only in the magnetisation direction, therefore have the same geometrical dimensions.

4. A sorter (1) according to at least one of the preceding claims,
**characterised in that**
the track (3) of the sorter (1) is fashioned such that upon travel of the sorter (1) through curves there is no contact of the permanent magnets (20) next-adjacent in the coupling region and oriented coaxially in a row.

5. A sorter (1) according to at least one of the preceding claims,
**characterised in that**
a magnetisation direction is oriented perpendicularly to the direction of motion or in an opposing direction to this direction.

6. A sorter (1) according to at least one of the preceding claims,
**characterised in that**
the carts (2) are guided along the track (3) on rails.

7. A sorter (1) according to at least one of the preceding claims,
**characterised in that**
the permanent magnet arrangement is modular in construction, therefore assembled from modules, wherein a respective module has a respective base plate on which there is secured a number of permanent magnets (20) associated with the module.

8. A sorter (1) according to claim 7,
**characterised in that**
different modules differ in the number of permanent magnets (20).

9. A sorter (1) according to one of claims 7 to 8,
**characterised in that** the base plate is arranged at the side, associated with the track (3), of the respective cart (2).

10. A sorter (1) according to at least one of the preceding claims,
**characterised in that**
the permanent magnet arrangement is active as a reactive part of a linear synchronous motor, therefore stator windings of the linear synchronous motor are arranged along the track (3), by whose magnetic fields in interaction with the permanent magnets (20) there can be generated the tractive force for the carts (2) of the sorter (1).

11. A sorter (1) according to at least one of the preceding claims,
**characterised in that**
the modules of each cart (2) are arranged one behind the other in the direction of motion and are connected to a securing means of the respective cart (2).

## Revendications

1. Dispositif de triage (1),
lequel dispositif de triage (1) comporte des chariots (2) respectivement couplés les uns aux autres, disposés en ligne et agencés avec mobilité le long d'une piste de déplacement (3),
chaque chariot (2) étant muni d'un ensemble d'aimants permanents, composé d'aimants permanents (20) disposés en ligne dans la direction de mouvement et espacés régulièrement les uns des autres, l'aimant permanent voisin (20), respectivement le plus rapproché, ayant un sens de magnétisation opposé,
sachant qu'un espacement, entre l'arête de deux aimants permanents voisins (20) située à l'avant dans la direction de mouvement, se présente comme une distance (a) et
qu'une longueur respective, dans la direction de mouvement d'un aimant permanent (20), se présente comme une longueur (b),
ladite longueur (b) étant plus petite que ladite distance (a),
sachant qu'une zone de couplage est prévue entre lesdits chariots (2),
**caractérisé par le fait que**,
dans le cas d'une orientation en ligne droite de deux chariots voisins (2) les plus rapprochés, le dernier aimant permanent (20) de l'un des deux chariots (2) présente, par rapport au premier aimant permanent (20) de l'autre, au sein des deux chariots (2), le même espacement régulier que celui des aimants permanents (20) restants, les uns par rapport aux autres,
sachant que des arêtes desdits premier et dernier aimants permanents sont de réalisation arrondie, afin de permettre le franchissement de courbes étroites,
le dernier aimant permanent (20) de l'un des deux chariots (2) présentant un sens de magnétisation opposé à celui du premier aimant permanent (20) de l'autre, au sein des deux chariots (2),
sachant que l'ensemble incluant tous les aimants permanents (20) dudit dispositif de triage (1) est respectivement exempt, dans sa globalité, de discontinuité dans la zone de couplage des chariots (2),
de telle sorte que le dernier aimant permanent (20) du premier chariot (2), et le premier aimant permanent (20) d'un chariot voisin (2) qui en est le plus rapproché, soient mutuellement espacés de la même distance que celle des aimants permanents (20) restants, par rapport aux aimants permanents (20) qui en sont les plus rapprochés,
et sachant que tous les aimants permanents (20) possèdent la même longueur (b).

2. Dispositif de triage (1) selon la revendication 1,
**caractérisé par le fait que**
les aimants permanents sont de réalisation parallélépipédique.

3. Dispositif de triage (1) selon au moins l'une des revendications précédentes, **caractérisé par le fait que**
tous les aimants permanents (20) se différencient uniquement quant au sens de magnétisation, c'est-à-dire qu'ils possèdent les mêmes dimensions géométriques.

4. Dispositif de triage (1) selon au moins l'une des revendications précédentes, **caractérisé par le fait que**
la piste de déplacement (3) dudit dispositif de triage (1) est conçue de façon telle qu'il ne se produise, au cours du franchissement de courbes dudit dispositif de triage (1), aucune venue en contact des aimants permanents voisins (20) orientés coaxialement en ligne, les plus rapprochés dans la zone de couplage.

5. Dispositif de triage (1) selon au moins l'une des revendications précédentes, **caractérisé par le fait**
**qu'**un sens de magnétisation est orienté perpendiculairement à la direction de mouvement, ou à l'opposé de cette direction.

6. Dispositif de triage (1) selon au moins l'une des revendications précédentes, **caractérisé par le fait que**
les chariots (2) sont guidés sur des rails le long de la piste de déplacement (3).

7. Dispositif de triage (1) selon au moins l'une des revendications précédentes, **caractérisé par le fait que**
l'ensemble d'aimants permanents présente un agencement structurel modulaire, c'est-à-dire qu'il est composé de modules, un module considéré étant pourvu d'une platine de base respective, sur laquelle est fixé un nombre d'aimants permanents (20) affecté audit module.

8. Dispositif de triage (1) selon la revendication 7,
**caractérisé par le fait que**
des modules différents se différencient par le nombre d'aimants permanents (20).

9. Dispositif de triage (1) selon l'une des revendications 7 à 8,
**caractérisé par le fait que**
la platine de base est située du côté du chariot (2) considéré qui est affecté à la piste de déplacement (3).

10. Dispositif de triage (1) selon au moins l'une des revendications précédentes,
**caractérisé par le fait que**
l'ensemble d'aimants permanents agit en tant que partie réactive d'un moteur linéaire synchrone, c'est-à-dire que des enroulements statoriques dudit moteur linéaire synchrone, implantés le long de la piste de déplacement (3), présentent des champs magnétiques par lesquels la force de traction destinée aux chariots (2) peut être engendrée, en interaction avec les aimants permanents (20).

11. Dispositif de triage (1) selon au moins l'une des revendications précédentes,
**caractérisé par le fait que**
les modules de chaque chariot (2) sont agencés en succession dans la direction de mouvement et sont reliés à un moyen de fixation du chariot (2) considéré.
